# EUROPÄISCHE PATENTSCHRIFT

(11) **EP 2 714 750 B1**
(45) Veröffentlichungstag und Bekanntmachung des Hinweises auf die Patenterteilung: **08.04.2015**
(21) Anmeldenummer: 12729029.4
(22) Anmeldetag: 30.05.2012
(51) Int. Cl.: C08F 2/00, C08F 2/06, C08F 2/18, C08F 2/22

(54) **VERFAHREN ZUR KONTINUIERLICHEN HERSTELLUNG WASSERABSORBIERENDER POLYMERPARTIKEL**
PROCESS FOR THE CONTINUOUS PRODUCTION OF WATER ABSORBABLE POLYMER PARTICLES
PROCÉDÉ CONTINUE DE PRODUCTION DE PARTICULES POLYMÈRE HYDRO-ABSORBANTES

(30) Priorität: 03.06.2011 EP 11168674
(43) Veröffentlichungstag der Anmeldung: 09.04.2014
(73) Patentinhaber: BASF SE, 67056 Ludwigshafen (DE)
(72) Erfinder: FUNK, Rüdiger, 65527 Niedernhausen (DE); PFEIFFER, Thomas, 67459 Böhl-Iggelheim (DE); SCHRÖDER, Jürgen, 67071 Ludwigshafen (DE)
(86) Internationale Anmeldenummer: PCT/EP2012/060075
(87) Internationale Veröffentlichungsnummer: WO 2012/163930

(56) Entgegenhaltungen:
- EP-A1- 1 840 137
- EP-A1- 2 471 847

## Beschreibung

Die vorliegende Erfindung betrifft ein Verfahren zur kontinuierlichen Herstellung wasserabsorbierender Polymerpartikel durch Polymerisation einer Acrylsäure und/oder deren Salze enthaltenden Monomerlösung, wobei die zugeführte Acrylsäure einen Gehalt an dimerer Acrylsäure von 0,02 bis 1 Gew.-% aufweist und der Gehalt an dimerer Acrylsäure im Wesentlichen konstant gehalten wird.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Die Eigenschaften der wasserabsorbierenden Polymerpartikel können beispielsweise über die verwendete Vernetzermenge eingestellt werden. Mit steigender Vernetzermenge sinkt die Zentrifugenretentionskapazität (CRC) und die Absorption unter einem Druck von 21,0 g/cm² (AUL0.3psi) durchläuft ein Maximum.

Zur Verbesserung der Anwendungseigenschaften, wie beispielsweise Permeabilität des gequollenen Gelbetts (SFC) in der Windel und Absorption unter einem Druck von 49.2 g/cm² (AUL0.7psi), werden wasserabsorbierende Polymerpartikel im allgemeinen oberflächennachvernetzt. Dadurch steigt der Vernetzungsgrad der Partikeloberfläche, wodurch die Absorption unter einem Druck von 49,2 g/cm² (AUL0.7psi) und die Zentrifugenretentionskapazität (CRC) zumindest teilweise entkoppelt werden können. Diese Oberflächennachvernetzung kann in wässriger Gelphase durchgeführt werden. Vorzugsweise werden aber getrocknete, gemahlene und abgesiebte Polymerpartikel (Grundpolymer) an der Oberfläche mit einem Oberflächennachvernetzer beschichtet und thermisch oberflächennachvernetzt. Dazu geeignete Vernetzer sind Verbindungen, die mit mindestens zwei Carboxylatgruppen der wasserabsorbierenden Polymerpartikel kovalente Bindungen bilden können.

Wasserabsorbierende Polymere werden zur Herstellung von Windeln, Tampons, Damenbinden und anderen Hygieneartikeln, aber auch als wasserzurückhaltende Mittel im landwirtschaftlichen Gartenbau verwendet.

Wasserabsorbierende Polymere werden überwiegend durch vernetzende Polymerisation teilneutralisierter Acrylsäure hergestellt. Aus Acrylsäure entsteht allerdings bei der Lagerung immer dimere Acrylsäure. Die Reaktion kann nicht unterdrückt werden.

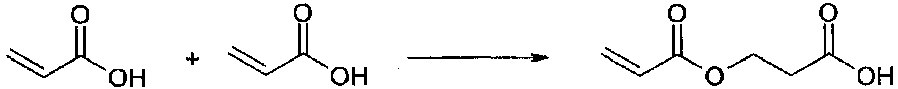

Dimere Acrylsäure wird bei der Polymerisation wie Acrylsäure in das entstehende Polymernetzwerk eingebaut. Aus der einpolymerisierten dimeren Acrylsäure wird bei höheren Temperaturen wieder Acrylsäure abgespalten, wodurch der Anteil nicht umgesetzter Acrylsäure im wasserabsorbierenden Polymer erhöht wird. Ein zu hoher Anteil an nicht umgesetzter Acrylsäure im wasserabsorbierenden Polymer ist, insbesondere bei Hygieneanwendungen, unerwünscht.

Zur Lösung dieses Problems schlägt EP 0 372 706 A1 vor die in der einzusetzenden Acrylsäure enthaltende dimere Acrylsäure vor der Polymerisation zu hydrolysieren. Nachteilig bei diesem Verfahren ist, dass sich die durch die Hydrolyse gebildete ß-Hydroxypropionsäure ebenfalls bei höheren Temperaturen in Acrylsäure umwandeln kann und so zu einem erhöhten Anteil an nicht umsetzter Acrylsäure im wasserabsorbierenden Polymer führt. Gemäß EP 0 574 260 A1 soll daher nur frisch destillierte Acrylsäure verwendet werden.

Ein weiteres Problem sind stark schwankende Anteile an nicht umgesetzter Acrylsäure in den wasserabsorbierenden Polymeren, die von den Kunden als Indikatoren auf Störungen während der Produktion und weitere unerkannte Abweichungen gesehen werden können.

Aufgabe der vorliegenden Erfindung war die Bereitstellung eines verbesserten kontinuierlichen Verfahrens zur Herstellung wasserabsorbierender Polymerpartikel, wobei insbesondere der Gehalt an Restmonomeren mit geringem Aufwand auf einem niedrigen Niveau konstant gehalten werden kann.

Gelöst wurde die Aufgabe durch ein Verfahren zur Herstellung wasserabsorbierender Polymerpartikel durch Polymerisation einer Monomerlösung oder -suspension, enthaltend
a) Acrylsäure, die zumindest teilweise neutralisiert sein kann,
b) mindestens einen Vernetzer,
c) mindestens einen Initiator,
d) optional ein oder mehrere mit Acrylsäure copolymerisierbare ethylenisch ungesättigte Monomere und
e) optional ein oder mehrere wasserlösliche Polymere,
zu einem Polymergel, die Trocknung des erhaltenen Polymergels, die Zerkleinerung des getrockneten Polymergels zu Polymerpartikeln und die Klassierung der erhaltenen Polymerpartikel, dadurch gekennzeichnet, dass die Acrylsäure kontinuierlich zugeführt wird, die kontinuierlich zugeführte Acrylsäure einen Gehalt an dimerer Acrylsäure von 0,02 bis 1 Gew.-% aufweist und der Gehalt an dimerer Acrylsäure im Wesentlichen konstant gehalten wird.

Der vorliegenden Erfindung liegt die Erkenntnis zugrunde, dass der durch dimere Acrylsäure bedingte Gehalt an nicht umgesetzter Acrylsäure in den wasserabsorbierenden Polymerpartikeln durch geeignete Maßnahmen, beispielsweise Optimierung der Trocknung oder Nachbehandlung mit Reduktions- oder Oxidationsmitteln, kompensiert werden kann. Somit kann auch ein höherer Anteil an dimerer Acrylsäure zugelassen werden. Der Anteil an dimerer Acrylsäure in der kontinuierlich zugeführten Acrylsäure sollte aber trotzdem nicht zu hoch sein. Die kontinuierlich zugeführte Acrylsäure enthält daher von 0,02 bis 1 Gew.-%, besonders bevorzugt von 0,05 bis 0,5 Gew.-%, ganz besonders bevorzugt von 0,1 bis 0,25 Gew.-%, an dimerer Acrylsäure.

Weiterhin ist es notwendig den Gehalt an dimerer Acrylsäure in der kontinuierlich zugeführten Acrylsäure im Wesentlichen konstant zu halten. Da der Anteil an dimerer Acrylsäure den Gehalt an nicht umgesetzter Acrylsäure beeinflusst, kann so auch der Gehalt an nicht umgesetzter Acrylsäure in den wasserabsorbierenden Polymerpartikeln im Wesentlichen konstant gehalten werden. Der Gehalt an dimerer Acrylsäure in der kontinuierlich zugeführten Acrylsäure ändert sich innerhalb von 24 Stunden vorzugsweise weniger als 20%, besonders bevorzugt weniger als 10%, ganz besonders bevorzugt weniger als 5%. Beispielsweise bedeutet bei einem Gehalt an dimerer Acrylsäure von 0,2 Gew.-% eine Änderung dieses Gehalts innerhalb von 24 Stunden um weniger als 0,02 Gew.-% eine Änderung von weniger als 10%.

De Anteil an dimerer Acrylsäure kann beispielsweise im Wesentlichen konstant gehalten werden, indem Acrylsäure aus mindestens zwei Lagertanks gemischt wird, wobei die Acrylsäure in einem Lagertank einen geringen Gehalt an dimerer Acrylsäure und die Acrylsäure im anderen Lagertank einen hohen Gehalt an dimerer Acrylsäure aufweist. In dem Lagertank mit einen hohen Gehalt an dimerer Acrylsäure beträgt dieser Gehalt vorzugsweise mindestens 0,1 Gew.-%, besonders bevorzugt mindestens 0,5 Gew.-%, ganz besonders bevorzugt mindestens 1 Gew.-%. Der Gehalt an dimerer Acrylsäure kann beispielsweise durch eine entsprechend lange Verweilzeit eingestellt werden.

Sollte der Gehalt an dimerer Acrylsäure in einem Lagertank zu hoch sein, so kann diese Acrylsäure zur Abtrennung der dimeren Acrylsäure entsprechend gereinigt werden, beispielsweise durch Destillation oder Kristallisation.

Der Einsatz von mindestens zwei Lagertanks für Acrylsäure ermöglicht es auf einfache Weise den Gehalt an dimerer Acrylsäure bei der Herstellung wasserabsorbierender Polymerpartikel auf Basis von Acrylsäure im Wesentlichen konstant zu halten. Dies kann beispielsweise durch gaschromatographische Analyse der Acrylsäure in den mindestens zwei Lagertanks und eine entsprechende Verhältnisregelung geschehen.

Das erfindungsgemäße Verfahren ermöglicht es auf eine einfache Weise den Gehalt an nicht umgesetzter Acrylsäure in den wasserabsorbierenden Polymerpartikeln im Wesentlichen konstant zu halten. Eine ebenfalls mögliche Analyse nicht umgesetzter Acrylsäure in den wasserabsorbierenden Polymerpartikeln mit einer entsprechenden Anpassung einer entsprechenden Nachbehandlung ist aufgrund der aufwendigeren und zeitintensiveren Analyse weniger geeignet. Eine ebenfalls mögliche auf einen hohen Gehalt an nicht umgesetzter Acrylsäure ausgelegte Nachbehandlung würde zu unerwünscht schwankenden Gehalten an nicht umgesetzter Acrylsäure führen.

In einer besonders bevorzugten Ausführungsform der vorliegenden Erfindung werden die wasserabsorbierenden Polymerpartikel oberflächennachvernetzt. Die oberflächennachvernetzten Polymerpartikel können anschließend nachbefeuchtet werden, wobei die Temperatur bei der Nachbefeuchtung mindestens 50°C beträgt.

Die wasserabsorbierenden Polymerpartikel werden durch Polymerisation einer Monomerlösung oder -suspension hergestellt und sind üblicherweise wasserunlöslich.

Verunreinigungen können einen erheblichen Einfluss auf die Polymerisation haben. Daher sollte die zugeführte Acrylsäure eine möglichst hohe Reinheit aufweisen. Es ist daher oft vorteilhaft die Acrylsäure speziell zu reinigen. Geeignete Reinigungsverfahren werden beispielsweise in der WO 2002/055469 A1, der WO 2003/078378 A1 und der WO 2004/035514 A1 beschrieben.

Die Acrylsäure enthält üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure. Beispielsweise kann zur Herstellung der Monomerlösung eine Acrylsäure mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Acrylsäure. Mit steigendem Vernetzergehalt sinkt die Zentrifugenretentionskapazität (CRC) und die Absorption unter einem Druck von 21,0 g/cm² durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit Acrylsäure copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Weiteren mit Acrylsäure copolymerisierbare ethylenisch ungesättigte Monomere d) sind beispielsweise ethylenisch ungesättigte Carbonsäuren, wie Methacrylsäure und Itaconsäure, und ethylenisch ungesättigte Sulfonsäuren, wie Styrolsulfonsäure und 2-Acrylamido-2-methylpropansulfonsäure (AMPS).

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Es ist aber auch möglich eine wässrige Monomerlösung zu vertropfen und die erzeugten Tropfen in einem erwärmten Trägergasstrom zu polymerisieren. Hierbei können die Verfahrensschritte Polymerisation und Trocknung zusammengefasst werden, wie in WO 2008/040715 A2 und WO 2008/052971 A1 beschrieben.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel wird dann vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur T_{g} auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 µm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel ("fines") niedrig sein.

Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 µm, beträgt vorzugsweise mindestens 90 Gew.-%, besonders bevorzugt mindesten 95 Gew.-%, ganz besonders bevorzugt mindestens 98 Gew.-%.

Vorteilhaft beträgt der Anteil an Partikeln mit einer Partikelgröße von höchstens 600 µm, vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel können zur weiteren Verbesserung der Eigenschaften oberflächennachvernetzt werden. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyloxazolidin-2-on, Oxazolidin-2-on und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die Oberflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet oder nachbefeuchtet werden. Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren hergestellten wasserabsorbierenden Polymerpartikel weisen einen Feuchtegehalt von vorzugsweise 0 bis 15 Gew.-%, besonders bevorzugt 1 bis 10 Gew.-%, ganz besonders bevorzugt 2 bis 8 Gew.-%, auf, wobei der Wassergehalt gemäß der von der EDANA empfohlenen Testmethode Nr. WSP 230.2-05 "Moisture Content" bestimmt wird.

Die gemäß dem erfindungsgemäßen Verfahren hergestellten wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA empfohlenen Testmethode Nr. WSP 241.2-05 "Centrifuge Retention Capacity" bestimmt.

Die gemäß dem erfindungsgemäßen Verfahren hergestellten wasserabsorbierenden Polymerpartikel weisen eine Absorption unter einem Druck von 49,2 g/cm² von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,2 g/cm² der wasserabsorbierenden Polymerpartikel beträgt üblicherweise weniger als 35 g/g. Die Absorption unter einem Druck von 49,2 g/cm² wird analog der von der EDANA empfohlenen Testmethode Nr. WSP 242.2-05 "Absorption under Pressure" bestimmt, wobei statt eines Drucks von 21,0 g/cm² ein Druck von 49,2 g/cm² eingestellt wird.

Ein weiterer Gegenstand der vorliegenden Erfindung ist eine Vorrichtung zur Durchführung des erfindungsgemäßen Verfahrens.

Die erfindungsgemäße Vorrichtung zur kontinuierlichen Herstellung wasserabsorbierender Polymerpartikel umfasst mindestens zwei parallele Lagertanks für Acrylsäure, mindestens einen Polymerisationsreaktor, mindestens einen Umluftbandtrockner, mindestens einen Walzenstuhl und mindestens eine Taumelsiebmaschine.

Mindestens ein Lagertanks kann vorzugsweise auf eine Temperatur von 15 bis 25°C thermostatisiert werden und/oder weist ein Füllvolumen von mindestens 100 m³ auf.

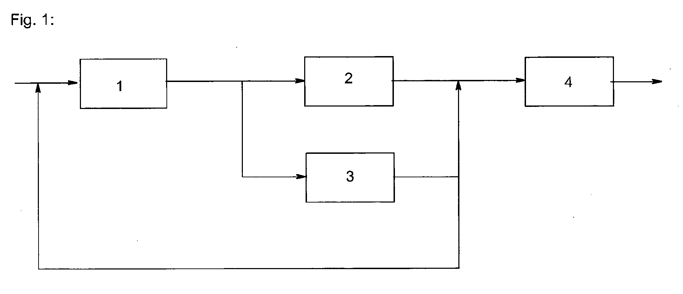

In einer besonders bevorzugten Ausführungsform der vorliegenden Erfindung weist mindestens ein Lagertank eine Rückführung in eine Vorrichtung zur Reinigung von Acrylsäure auf. Die Figur 1 zeigt eine mögliche Verschaltung dieser bevorzugten Ausführungsform, wobei die Bezugszeichen die folgende Bedeutung haben:
1 Vorrichtung zur Reinigung von Acrylsäure
2 Lagertank 1
3 Lagertank 2
4 Vorrichtung zur Herstellung wasserabsorbierender Polymerpartikel

Die Vorrichtung zur Reinigung von Acrylsäure kann eine Destillation oder eine Kristallisation sein. Beide Arten der Reinigung sind geeignet den Gehalt an dimerer Acrylsäure zu senken.

Ganz besonders bevorzugt weist die erfindungsgemäße Vorrichtung zusätzlich noch eine Vorrichtung zur Oberflächennachvernetzung auf.

### Methoden:

Die nachfolgend beschriebenen, mit "WSP" bezeichneten Standard-Testmethoden werden beschrieben in: "Standard Test Methods for the Nonwovens Industry", Ausgabe 2005, gemeinsam herausgegeben von den "Worldwide Strategie Partners" EDANA (Avenue Eugene Plasky, 157, 1030 Brüssel, Belgien, www.edana.org) und INDA (1100 Crescent Green, Suite 115, Cary, North Carolina 27518, U.S.A., www.inda.org). Diese Veröffentlichung ist sowohl von EDANA als auch von INDA erhältlich.

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymerpartikel werden vor der Messung gut durchmischt.

### Restmonomere (Residual Monomers)

Die Restmonomeren in den wasserabsorbierenden Polymerpartikel werden gemäß der von der EDANA empfohlenen Testmethode Nr. WSP 210.2-05 " Residual Monomers " bestimmt.

### Beispiele

### Herstellung der Grundpolymere:

### Beispiel 1

Eine auf einen Neutralisationsgrad von 70 Mol-% teilneutralisierte Mischung aus 96 g Acrylsäure, 785 g Natriumacrylatlösung (37,3 Gew.-% Natriumacrylat, gelöst in Wasser) und 115 g deionisiertem Wasser (welche einen Anteil an dimerer Acrylsäure von 127 ppm besaß) und 0,88 g ethoxyliertem Glycerintriacrylat (3 Äquivalente Ethylenoxid pro Äquivalent Glycerin) wurden bei 23°±1°C in einem Polyethylenbecher mit einem Volumen von 2 Litern 30 Minuten mit Stickstoffgas vom enthaltenen Luftsauerstoff befreit. Anschließend wurde die gerührte Mischung bei 23°±1°C zur Initiierung der Polymerisation mit 2,34 g Natriumperoxodisulfatlösung (10 Gew.-% in deionisiertem Wasser), 1,50 g Ascorbinsäurelösung (1 Gew.-% in deionisiertem Wasser) und 1,50 g H₂O₂-Lösung (1 Gew.-% in deionisiertem Wasser) versetzt. Das Temperaturmaximum von ca. 108°C wurde nach ca. 25 Minuten erreicht. 60 Minuten nach dem Start der Polymerisation wurde das erhaltene Polymergel mit einem Extruder zerkleinert, 60 Minuten bei 150°C im Umlufttrockenschrank getrocknet, mit einem Walzenstuhl dreimal gemahlen (Spaltbreiten: 1000 µm, 600 µm und 400 µm) und auf einen Partikelgrößenbereich von 150 bis 850 µm gesiebt.

Bezogen auf 100 g dieses Grundpolymers (1-B) wurde die Oberfläche der Partikel in einem Mischaggregat (Waring® Blender) mit einer Lösung aus 0,1 g N-(2-Hydroxyethyl)-2-oxazolidinon, 0,1 g 1,3-Propandiol und 3,8 g einer Wasser/Isopropanol-Mischung (70/30) versetzt und anschließend 60 Minuten auf 180°C erhitzt. Evtl. dabei entstandene Agglomerate wurden mit einem Sieb mit einer Maschenweite von 850 µm abgetrennt.

Der Restmonomergehalt des Grundpolymers (1-B) betrug 682 ppm, der des oberflächennachvernetzten Polymers (1) betrug 717 ppm.

### Beispiel 2a

Beispiel 1 wurde wiederholt, jedoch mit einem Anteil an dimerer Acrylsäure in der Mischung von 688 ppm.

Der Restmonomergehalt des Grundpolymers (2a-B) betrug 1052 ppm, der des oberflächennachvernetzten Polymers (2a) betrug 1578 ppm.

### Beispiel 2b

Beispiel 1 wurde mit der dreifachen Menge an Einsatzstoffen in einem Polyethylenbecher, mit einem Volumen von 5 Litern wiederholt. Der Anteil an dimerer Acrylsäure in der Mischung betrug ebenfalls 688 ppm. Bei der Polymerisation wurde ein Temperaturmaximum von ca. 109°C erreicht.

Der Restmonomergehalt des Grundpolymers (2b-B) betrug 980 ppm, der des oberflächennachvernetzten Polymers (2b) betrug 1522 ppm.

### Beispiel 3a

Das oberflächennachvernetzte Polymer (2a) aus Beispiel 2a wurde in gleichgroße Portionen unterteilt und jede Portion unter identischen Bedingungen in einem Mischaggregat (Waring® Blender) mit unterschiedlichen Mengen wässriger Natriumbisulfitlösung versetzt.

Die mit NaHSO₃-Lösung versetzten Proben wurden 180 Minuten auf 80°C erhitzt. Anschließend wurde der Restmonomergehalt der nachbehandelten Polymere (3a-1) bis (3a-4) bestimmt. Die Ergebnisse sind in Tabelle 1 zusammengefasst.

### Beispiel 3b

Das oberflächennachvernetzte Polymer (2b) aus Beispiel 2b wurde in gleichgroße Portionen unterteilt und jede Portion unter identischen Bedingungen in einem Mischaggregat (Waring® Blender) mit unterschiedlichen Mengen wässriger Natriumbisulfit-Lösung versetzt.

Die mit NaHSO₃-Lösung versetzten Proben wurden 60 Minuten auf 150°C erhitzt. Anschließend wurde der Restmonomergehalt der nachbehandelten Polymere (3b-1) bis (3b-4) bestimmt. Die Ergebnisse sind in Tabelle 1 zusammengefasst.

### Beispiel 4a

Das oberflächennachvernetzte und wie unter Beispiel 3b beschriebene, in gleichgroße Portionen unterteilte Polymer (2b) aus Beispiel 2b wurde mit unterschiedlichen Mengen wässriger Natriumperoxodisulfatlösung versetzt.

Die mit Na₂S₂O₈-Lösung versetzten Proben wurden 180 Minuten auf 80°C erhitzt. Anschließend wurde der Restmonomergehalt der nachbehandelten Polymere (4a-1) bis (4a-4) bestimmt. Die Ergebnisse sind in Tabelle 1 zusammengefasst.

### Beispiel 4b

Das oberflächennachvernetzte und wie unter Beispiel 3b beschriebene, in gleichgroße Portionen unterteilte Polymer (2b) aus Beispiel 2b wurde mit unterschiedlichen Mengen wässriger Natriumperoxodisulfatlösung versetzt.

Die mit Na₂S₂O₈-Lösung versetzten Proben wurden 60 Minuten auf 150°C erhitzt. Anschließend wurde der Restmonomergehalt der nachbehandelten Polymere (4b-1) bis (4b-4) bestimmt. Die Ergebnisse sind in Tabelle 1 zusammengefasst.

**Tab. 1: Einfluss der Nachbehandlung auf den Restmonomerengehalt**

| Polymer | Wasser [%] | NaHSO₃ [%] | Na₂S₂O₈ [%] | Nachbehandlungstemperatur [°C] | Nachbehand lungszeit [min] | Restmonomergehalt [ppm] |
|---|---|---|---|---|---|---|
| (1) | --- | --- | --- | --- | --- | 717 |
| (2a) | --- | --- | --- | --- | --- | 1578 |
| (2b) | --- | --- | --- | --- | --- | 1522 |
| (3a-1) | 20 | 0 | --- | 80 | 180 | 1263 |
| (3b-1) | 20 | 0 | --- | 150 | 60 | 1227 |
| (3a-2) | 20 | 0,5 | --- | 80 | 180 | 772 |
| (3b-2) | 20 | 0,5 | --- | 150 | 60 | 777 |
| (3a-3) | 60 | 0 | --- | 80 | 180 | 1076 |
| (3b-3) | 60 | 0 | --- | 150 | 60 | 1059 |
| (3a-4) | 60 | 0,5 | --- | 80 | 180 | 243 |
| (3b-4) | 60 | 0,5 | --- | 150 | 60 | 174 |
| (4a-1) | 20 | --- | 0 | 80 | 180 | 1353 |
| (4b-1) | 20 | --- | 0 | 150 | 60 | 1353 |
| (4a-2) | 20 | --- | 0,1 | 80 | 180 | 1238 |
| (4b-2) | 20 | --- | 0,1 | 150 | 60 | 1101 |
| (4a-3) | 60 | --- | 0 | 80 | 180 | 1140 |
| (4b-3) | 60 | --- | 0 | 150 | 60 | 1122 |
| (4a-4) | 60 | --- | 0,1 | 80 | 180 | 1095 |
| (4b-4) | 60 | --- | 0,1 | 150 | 60 | 517 |

Die Prozentangaben sind Gewichtsprozente bezogen auf das eingesetzte Polymer.

Die Beispiele 1 bis 4 zeigen, dass ein höherer Gehalt an dimerer Acrylsäure durch eine entsprechende Nachbehandlung kompensiert werden kann.

### Beispiel 5 bis 7

Die in Beispiel 2b, Bezug nehmend auf Beispiel 1, beschriebenen Herstellbedingungen der Polymerisation, der Zerkleinerung des Polymergels, der Mahlung und der Siebung wurden unter identischen Bedingungen wiederholt, jedoch besaßen die Monomermischungen der Beispiele 5 bis 7 unterschiedliche Anteile an dimerer Acrylsäure. Die Bedingungen der Trocknung und die Restmonomerengehalte der einzelnen Proben sind in Tabelle 2 zusammengefasst.

Bei der Variation der Trocknung wurden immer identische Probenmengen in dünner Schicht (etwa Gelpartikelstärke) gleichmäßig auf Siebböden verteilt und im Umlufttrockenschrank getrocknet.

**Tab. 2: Einfluss der Trocknungsbedingungen**

| Beispiel | Anteil dimerer Acrylsäure [ppm] | Trocknungstemperatur [°C] | Trocknungszeit [min] | Restmonomergehalt [ppm] |
|---|---|---|---|---|
| 5 | 266 | 170 | 80 | 578 |
| 6 | 657 | 170 | 80 | 1205 |
| | | | 60 | 1187 |
| | | | 40 | 1005 |
| | | 160 | 80 | 1048 |
| | | | 60 | 987 |
| | | | 40 | 891 |
| | | 150 | 80 | 1031 |
| | | | 60 | 827 |
| | | | 40 | 755 |
| 7 | 998 | 170 | 80 | 1833 |
| | | | 60 | 1776 |
| | | | 40 | 1661 |
| | | 160 | 80 | 1679 |
| | | | 60 | 1546 |
| | | | 40 | 1460 |
| | | 150 | 80 | 1555 |
| | | | 60 | 1201 |
| | | | 40 | 1132 |

Die Beispiele 5 bis 7 zeigen, dass ein höherer Gehalt an dimerer Acrylsäure durch eine entsprechende Anpassung der Trocknungsbedingungen kompensiert werden kann.

## Patentansprüche

1. Verfahren zur kontinuierlichen Herstellung wasserabsorbierender Polymerpartikel, umfassend die Polymerisation einer Monomerlösung oder-suspension, enthaltend
a) Acrylsäure, die zumindest teilweise neutralisiert sein kann,
b) mindestens einen Vernetzer,
c) mindestens einen Initiator,
d) optional ein oder mehrere mit Acrylsäure copolymerisierbare ethylenisch ungesättigte Monomere und
e) optional ein oder mehrere wasserlösliche Polymere,
zu einem Polymergel, die Trocknung des erhaltenen Polymergels, die Zerkleinerung des getrockneten Polymergels zu Polymerpartikeln und die Klassierung der erhaltenen Polymerpartikel, **dadurch gekennzeichnet, dass** die Acrylsäure kontinuierlich zugeführt wird, die kontinuierlich zugeführte Acrylsäure einen Gehalt an dimerer Acrylsäure von 0,02 bis 1 Gew.-% aufweist und der Gehalt an dimerer Acrylsäure im Wesentlichen konstant gehalten wird.

2. Verfahren gemäß Anspruch 1, **dadurch gekennzeichnet, dass** die kontinuierlich zugeführte Acrylsäure einen Gehalt an dimerer Acrylsäure von 0,1 bis 0,25Gew.-% aufweist.

3. Verfahren gemäß Anspruch 1 oder 2, **dadurch gekennzeichnet, dass** sich der Gehalt an dimerer Acrylsäure in der kontinuierlich zugeführten Acrylsäure in 24 Stunden um weniger als 10% ändert.

4. Verfahren gemäß einem der Ansprüche 1 bis 3, **dadurch gekennzeichnet, dass** Acrylsäure aus mindestens zwei Lagertanks eingesetzt wird.

5. Verfahren gemäß Anspruch 4, **dadurch gekennzeichnet, dass** die Acrylsäure in einem der Lagertanks einen Gehalt an dimerer Acrylsäure von mindestens 0,1 Gew.-% aufweist.

6. Verfahren gemäß einem der Ansprüche 1 bis 5, **dadurch gekennzeichnet, dass** die wasserabsorbierenden Polymerpartikel oberflächennachvernetzt werden.

7. Verfahren gemäß einem der Ansprüche 1 bis 6, **dadurch gekennzeichnet, dass** die wasserabsorbierenden Polymerpartikel oberflächennachvernetzt und nachbefeuchtet werden.

8. Verfahren gemäß einem der Ansprüche 1 bis 7, **dadurch gekennzeichnet, dass** die wasserabsorbierenden Polymerpartikel oberflächennachvernetzt und bei einer Temperatur von mindestens 50°C nachbefeuchtet werden.

9. Verfahren gemäß einem der Ansprüche 1 bis 8, **dadurch gekennzeichnet, dass** die wasserabsorbierenden Polymerpartikel einen Wassergehalt von 1 bis 10 Gew.-% aufweisen.

10. Verfahren gemäß einem der Ansprüche 1 bis 9, **dadurch gekennzeichnet, dass** die wasserabsorbierenden Polymerpartikel eine Zentrifugenretentionskapazität von mindestens 15 g/g aufweisen.

11. Vorrichtung zur kontinuierlichen Herstellung wasserabsorbierender Polymerpartikel, umfassend mindestens zwei parallele Lagertanks für Acrylsäure, mindestens einen Polymerisationsreaktor, mindestens einen Umluftbandtrockner, mindestens einen Walzenstuhl und mindestens eine Taumelsiebmaschine.

12. Vorrichtung gemäß Anspruch 11, **dadurch gekennzeichnet, dass** die Lagertanks für Acrylsäure auf eine Temperatur von 15 bis 25°C thermostatisiert werden können.

13. Vorrichtung gemäß Anspruch 11 oder 12, **dadurch gekennzeichnet, dass** mindestens einer der Lagertanks für Acrylsäure ein Füllvolumen von mindestens 100 m³ aufweist.

14. Vorrichtung gemäß einem der Ansprüche 11 bis 13, **dadurch gekennzeichnet, dass** mindestens einer der Lagertanks für Acrylsäure eine Ableitung zu einer Vorrichtung zur Reinigung von Acrylsäure aufweist.

15. Vorrichtung gemäß einem der Ansprüche 11 bis 14, **dadurch gekennzeichnet, dass** die Vorrichtung zusätzlich eine Vorrichtung zur Oberflächennachvernetzung der wasserabsorbierenden Polymerpartikel umfasst.

## Claims

1. A process for continuously producing water-absorbing polymer particles, comprising the polymerization of a monomer solution or suspension comprising
a) acrylic acid which may be at least partly neutralized,
b) at least one crosslinker,
c) at least one initiator,
d) optionally one or more ethylenically unsaturated monomers copolymerizable with acrylic acid and
e) optionally one or more water-soluble polymers,
to give a polymer gel, the drying of the resulting polymer gel, the comminution of the dried polymer gel to give polymer particles and the classification of the resulting polymer particles, wherein the acrylic acid is supplied continuously, the acrylic acid supplied continuously has a dimeric acrylic acid content of 0.02 to 1% by weight and the dimeric acrylic acid content is kept essentially constant.

2. The process according to claim 1, wherein the acrylic acid supplied continuously has a dimeric acrylic acid content of 0.1 to 0.25% by weight.

3. The process according to claim 1 or 2, wherein the dimeric acrylic acid content in the the acrylic acid supplied continuously varies by less than 10% within 24 hours.

4. The process according to any of claims 1 to 3, wherein acrylic acid from at least two storage tanks is used.

5. The process according to claim 4, wherein the acrylic acid in one of the storage tanks has a dimeric acrylic acid content of at least 0.1% by weight.

6. The process according to any of claims 1 to 5, wherein the water-absorbing polymer particles are surface postcrosslinked.

7. The process according to any of claims 1 to 6, wherein the water-absorbing polymer particles are surface postcrosslinked and remoisturized.

8. The process according to any of claims 1 to 7, wherein the water-absorbing polymer particles are surface postcrosslinked and remoisturized at a temperature of at least 50°C.

9. The process according to any of claims 1 to 8, wherein the water-absorbing polymer particles have a water content of 1 to 10% by weight.

10. The process according to any of claims 1 to 9, wherein the water-absorbing polymer particles have a centrifuge retention capacity of at least 15 g/g.

11. An apparatus for continuous production of water-absorbing polymer particles, comprising at least two parallel storage tanks for acrylic acid, at least one polymerization reactor, at least one forced air belt drier, at least one roll mill and at least one tumbling sieving machine.

12. The apparatus according to claim 11, wherein the storage tanks for acrylic acid can be thermostated to a temperature of 15 to 25°C.

13. The apparatus according to claim 11 or 12, wherein at least one of the storage tanks for acrylic acid has a capacity of 100 m³.

14. The apparatus according to any of claims 11 to 13, wherein at least one of the storage tanks for acrylic acid has an outlet to an apparatus for purification of acrylic acid.

15. The apparatus according to any of claims 11 to 14, which additionally comprises an apparatus for surface postcrosslinking of the water-absorbing polymer particles.

## Revendications

1. Procédé pour la préparation continue de particules polymères absorbant l'eau, comprenant la polymérisation d'une solution ou d'une suspension de monomères, contenant
a) de l'acide acrylique, qui peut être au moins partiellement neutralisé,
b) au moins un réticulant,
c) au moins un initiateur,
d) éventuellement un ou plusieurs monomères éthyléniquement insaturés copolymérisables avec l'acide acrylique et
e) éventuellement un ou plusieurs polymères solubles dans l'eau,
en un gel polymère, le séchage du gel polymère obtenu, le broyage du gel polymère séché en particules polymères et la classification des particules polymères obtenues, **caractérisé en ce que** l'acide acrylique est alimenté en continu, l'acide acrylique alimenté en continu présentant une teneur en acide acrylique dimère de 0,02 à 1% en poids et la teneur en acide acrylique dimère étant essentiellement maintenue constante.

2. Procédé selon la revendication 1, **caractérisé en ce que** l'acide acrylique alimenté en continu présente une teneur en acide acrylique dimère de 0,1 à 0,25% en poids.

3. Procédé selon la revendication 1 ou 2, **caractérisé en ce que** la teneur en acide acrylique dimère dans l'acide acrylique alimenté en continu varie de moins de 10% en 24 heures.

4. Procédé selon l'une quelconque des revendications 1 à 3, **caractérisé en ce qu'**on utilise de l'acide acrylique provenant d'au moins deux réservoirs de stockage.

5. Procédé selon la revendication 4, **caractérisé en ce que** l'acide acrylique dans un des réservoirs de stockage présente une teneur en acide acrylique dimère d'au moins 0,1% en poids.

6. Procédé selon l'une quelconque des revendications 1 à 5, **caractérisé en ce que** les particules polymères absorbant l'eau sont post-réticulées en surface.

7. Procédé selon l'une quelconque des revendications 1 à 6, **caractérisé en ce que** les particules polymères absorbant l'eau sont post-réticulées en surface et post-humidifiées.

8. Procédé selon l'une quelconque des revendications 1 à 7, **caractérisé en ce que** les particules polymères absorbant l'eau sont post-réticulées en surface et post-humidifiées à une température d'au moins 50°C.

9. Procédé selon l'une quelconque des revendications 1 à 8, **caractérisé en ce que** les particules polymères absorbant l'eau présentent une teneur en eau de 1 à 10% en poids.

10. Procédé selon l'une quelconque des revendications 1 à 9, **caractérisé en ce que** les particules polymères absorbant l'eau présentent une capacité de rétention dans une centrifugeuse d'au moins 15 g/g.

11. Dispositif pour la préparation continue de particules polymères absorbant l'eau, comprenant au moins deux réservoirs de stockage parallèles pour l'acide acrylique, au moins un réacteur de polymérisation, au moins un sécheur à bande à circulation d'air, au moins un broyeur à cylindres et au moins un dispositif de tamisage oscillant.

12. Dispositif selon la revendication 11, **caractérisé en ce que** les réservoirs de stockage pour l'acide acrylique peuvent être thermostatés à une température de 15 à 25°C.

13. Dispositif selon la revendication 11 ou 12, **caractérisé en ce qu'**au moins un des réservoirs de stockage pour l'acide acrylique présente un volume de remplissage d'au moins 100 m³.

14. Dispositif selon l'une quelconque des revendications 11 à 13, **caractérisé en ce qu'**au moins un des réservoirs de stockage pour l'acide acrylique présente une conduite d'évacuation vers un dispositif pour la purification de l'acide acrylique.

15. Dispositif selon l'une quelconque des revendications 11 à 14, **caractérisé en ce que** le dispositif présente en outre un dispositif pour la post-réticulation en surface des particules polymères absorbant l'eau.
